Europäisches Patentamt

European Patent Office

Office européen des brevets

(19)

(11) Publication number: **0 412 812 A1**

## (12) EUROPEAN PATENT APPLICATION

(21) Application number: 90308754.2

(22) Date of filing: 09.08.90

(51) Int. Cl.⁵: **C03C 17/27**, C03C 17/22,
C25D 11/34, C03C 17/06

(30) Priority: **10.08.89 GB 8918289**

(43) Date of publication of application:
**13.02.91 Bulletin 91/07**

(84) Designated Contracting States:
**BE DE DK ES FR GB IT NL**

(71) Applicant: **SOLAGLAS LIMITED**
**The King's Observatory, Old Deer Park**
**Richmond, Surrey TW9 2AZ(GB)**

(72) Inventor: **Whittingham, Simon**
**44 Latimer Road**
**London E7 0LQ(GB)**

(74) Representative: **Howick, Nicholas Keith et al**
**CARPMAELS & RANSFORD 43 Bloomsbury**
**Square**
**London WC1A 2RA(GB)**

㉜ **Glass product.**

㉗ The appearance of sheet glass having a film comprising a metal or metal compound, e.g. stainless steel and/or titanium nitride, bonded to a surface thereof is changed by subjecting that surface, or one or more selected portions therof, either to an oxygen-containing atmosphere at an elevated temperature or to an anodising treatment. The heat treatment may be modified by applying lead monoxide and/or tin oxide to portions of the said surface of the glass in order to accelerate a colour change in those portions. The anodising treatment may result in a colour change of the film or selective removal of the film, depending upon the chemical nature of the film.

EP 0 412 812 A1

## GLASS PRODUCT

### Field of the invention

The present invention relates to a method of changing the appearance, e.g. the colour, of conventionally manufactured reflectively coated transparent glass.

### Background to the invention

In such glass a metal or metallic compound, e.g. a titanium compound, is bonded to the surface on one side. This gives the glass distinctive reflection and transmission properties. When the glass is brightly lit on one side it appears, as viewed from that one side, to be strongly tinted and largely reflective. When viewed from the other side however the glass appears substantially transparent and only slightly tinted. Designers have used these glasses to reduce the transmission of solar energy in a range of applications from automotive design to architecture. The designer has however been constrained to use glass of one of a limited range of standard colours. These colours tend to be largely neutral and subdued and are largely determined by the choice of material for the glass substrate and coating.

### Summary of the invention

In one aspect, this invention provides a method of changing the appearance of glass having a film (which term includes a coating) comprising a metal or metal compound bonded to a surface thereof, the method comprising changing the chemical composition of at least a portion of the film to cause a change in the appearance of the glass, e.g. when viewed in reflected light, for example a permanent change in its colour, or to cause separation of the portion from the glass. The chemical composition may be changed by contacting the film or film portion with oxygen, e.g. in the form of air, at an elevated temperature or by anodizing the film or film portion. The change in composition may be one which produces a colour change or, in the case of anodization, separates the film from the glass if an appropriate film is applied to the glass; we have found that a suitable film for treatment by heating in the presence of oxygen or by anodization to produce a colour change is a film comprising titanium nitride. We have also found that stainless steel-based films are suitable for treatment by anodization to separate the film from the glass.

The present invention also provides a method of changing the appearance of glass having a film comprising a metal or metal compound bonded to a surface thereof, the method comprising oxygenating at least a portion of the film to cause a permanent change in the colour of the glass, e.g. as viewed in reflected light, where the film has been oxygenated or to cause separation of the film from the glass.

More specifically, the invention provides a method of changing the appearance of glass having a film comprising a metal or metal compound bonded to a surface thereof, comprising heating the film in the presence of air or another oxygen-containing gas to cause a permanent change in the colour of the glass, e.g. as viewed in reflected light. If desired a portion of the film may be masked with a material to block or accelerate oxygenation, such that a pattern is formed. The film must be one which changes colour upon oxygenation. If the film being treated is based on titanium nitride, a temperature of up to 750°C, typically between 200 and 630°C, e.g. between 300 and 600°C, is desirable.

The invention further provides a method of changing the appearance of glass having a film comprising a metal or metal compound bonded to a surface thereof, comprising anodizing the film. We have found that, with one type of coated glass, anodizing causes a colour change whereas, with another type, the result is separation of the film from the glass. By selectively anodizing certain region or regions of the film a pattern may be obtained; in the case of film separation, only selective anodizing would appear to be commercially useful. Selective anodizing may be achieved by using a masking technique or by application of the cathode to one or more selected regions of the film. Selective application may be achieved by use of an appropriately configured (e.g. contoured) plate or roller as the cathode or by using a rod-shaped cathode as an "electric pen", which is drawn across the selected region(s) of the film.

Included in the invention is glass having bonded to a surface thereof an oxygenated film comprising a metal or metal compound, especially such glass in which only one or more areas of the films are oxygenated or in which there are areas oxygenated to a different degree.

The invention further includes glass having bonded to a surface thereof a film comprising a metal or metal compound, a portion of which film has been removed by anodization.

The treated glass according to the present invention will usually be in the form of a sheet. Although curved sheet glass may come into consideration, the glass will usually be in flat sheet form.

The glass of the invention may be used as a decorative product, for example in building. It is possible to change the colour of an entire sheet of glass, a process which was previously prohibitively expensive as it would have involved changing the formulation of the film, or to create a pattern. The present invention therefore enables custom colours, patterns or logos to be incorporated in small numbers of glass sheets at reasonable cost.

If the colour of the glass is to be changed, the film must be one whose colour can be changed by changing its chemical composition. It is known that transition metals, in particular, form compounds of a variety of colours and it is therefore contemplated that the film will generally comprise a transition metal, e.g., in the form of a compound thereof. Titanium compounds, e.g. titanium nitride are a preferred constituent.

## Description of preferred embodiments

Metal coated sheet glasses are well known in the glass industry and are used primarily as solar control materials in architectural and some automotive applications. Examples of such coated glasses are those sold under the trade marks SUNCOOL BRONZE and COOL-LITE by Pilkington plc and St. Gobain, respectively.

Hitherto, glass of a desired colour has been provided by dedicating the entire manufacturing process to that colour and it was not known to introduce patterns into the film. We have devised a method of changing the colour of individual glass sheets or of selectively changing the colour of, or removing portions of, the film. Specifically, we have achieved these effects by heat treatment or by anodization. These exemplary methods of performing the invention are described below.

### Heat Treatment

The glass to be treated is placed in a kiln which fires under an oxidising atmosphere, e.g. air. Typical coated glasses are SUNCOOL BRONZE (Pilkington plc) or COOL-LITE (St. Gobain). SUNCOOL BRONZE has a coating formulation of titanium nitride. Glasses with a number of different coatings are sold under the trade mark COOL-LITE, the different coatings are believed to include a titanium nitride-based coating and a stainless steel-based coating. Both SUNCOOL BRONZE and COOL-LITE react particularly well to heat treatment.

One of the above coated glasses is heated to a temperature in excess of 200° C for a period of time to cause permanent colour change to the metallic coating. For instance a constant temperature of 570° C will result in a pink reflective glass if left for half an hour at that temperature. In general, it is contemplated that in the invention a temperature of at least 200° C will be used.

The kiln temperature and time left at that temperature are directly related to the resulting colour of the reflective coating, as (it is believed) the titanium nitride passes through a sequence of oxygenated states. The colour sequence obtained with a typical metal coated glass is green, gold, blue, pink.

During the heat treatment, oxygen apparently enters the metal coating from both the glass substrate and, more importantly, the atmosphere. It therefore appears that the oxygen oxygenates the coating (presumably causing formation of oxides) causing physical colour change and perhaps interference.

Specific colours, which can be localised on the coating to create a pattern or logo, can be achieved by screen-printing or otherwise applying (e.g. by printing, spraying or roller application) a mixture of litharge (PbO) and stannic oxide ($SnO_2$) onto the coating, e.g. a mixture containing from 60-70 parts by weight, especially 65 parts by weight, of litharge and from 30-40 parts by weight, especially 35 parts by weight of stannic oxide. The mixture may be calcined and was obtained from Messrs Keeling and Walker, Stoke-on-Trent, England; other possible suppliers are Messrs. Bayer U.K., Messrs Cooksons, Messrs. Sneyde Oxides, Messrs. Ferro and Messrs Emery Colours. Images of different colour will be seen if, for instance, the glass is fired to a temperature of 650° C and the kiln is switched off as soon as the temperature is achieved. The colour underneath the screen printed activating agent will be a vibrant metallic blue and the surrounding area will retain its original state and remain silver in colour. The blue colour is similar to that which can be obtained by heating the coating in air at a sufficiently high temperature or by more prolonged heating at a lower temperature. It is therefore surmised that the $PbO/SnO_2$ mixture accelerates oxide

formation by an oxygen donor effect. In any event, it is contemplated that patterned glass may be achieved by using other coatings which effect or accelerate oxygenation, or by use of either of PbO or $SnO_2$. A suitable amount of $PbO/SnO_2$, or other oxidising agent, can be readily determined by routine testing: amounts in the range of 2 to 8, e.g. about 5 $g/m^2$, come into consideration. Various colours can be achieved with different combinations of temperatures and time and differing formulations of activating agent. Patterns can also be achieved by masking part of the glass with a blocking agent to prevent oxygen reaching the film coating. It is also possible to apply the $PbO/SnO_2$ or other oxidising agent to certain areas, to apply a blocking agent to other areas and to leave other areas uncovered; where the heating conditions are such as to affect the uncovered areas the result will be a pattern made up of three colours (or shades of colours).

It has been found that at 400°C a blue glass may be produced. At temperatures of substantially 600°C a pink glass may be produced. The precise shade of colour obtained may be controlled by varying the temperature slightly. Thus, it has been found that heating the glass for one hour at temperatures in the range 590°C to 630°C produces various shades of pink. Heating for one hour at temperatures in excess of substantially 630°C may be found to produce a glass which is cloudy in appearance and therefore unusable for most purposes. It has been found however that at the transitional temperature (substantially 630°C when heated for one hour) a glass with a highly distinctive appearance is produced.

Although in the embodiment described the glass is heated in air in a conventional electric kiln, the process may be adapted by the use of different heat sources such as infrared or gas kilns and different atmospheres. Of course, the atmosphere must have a component which will change the composition of the film to produce a change its colour. The use of an oxygenating agent, e.g. lead (II) oxide and/or tin (IV) oxide, to create a pattern upon heating in a non-oxidising atmosphere may also be possible.

The finished glass lamina may be acid etched (e.g. with acid ammonium bifluoride paste), either on the glass side of the sheet to diffuse the reflected colour, or on the coated side to create an image or pattern which is substantially invisible in transmitted light but is apparent in reflected light. The glass may be painted on one side with an opaque material to create a cladding product and also to change the tone of the reflected colour. Thus, use may be made of enamels based on lead borosilicate glass modified with metal oxides in order to obtain various fired-in effects on the glass. Lustres comprising organometallic compounds dissolved in resin-solvent blends may be used to add metallic coloured tints on firing. Backing boards which may be applied to produce cladding panels include "Celotex Hydroform" panels from Messrs. Celotex Ltd. The heat treating of the glass may advantageously be combined with a toughening process. Alternatively, the glass may be laminated to produce a safety glass; the safety film applied to the glass for this purpose may include a coloured opacifier. It will be appreciated, of course, that the aforesaid treatments can also be applied to the glass products of this invention obtained by the anodization process.

## Anodization

Using similar glasses it has been found that anodization can oxygenate a metal coating either to selectively remove or to change the coating of the glass, again to create innovative decorative effects. The benefits of this technique are potentially twofold. First more specific control may be achieved and secondly the process time is far quicker.

Typical metal coated glasses would be SUNCOOL BRONZE (Pilkington) or COOL-LITE (St. Gobain). In the case of SUNCOOL BRONZE glass the electric treatment causes rapid colour change and passes through a colour sequence similar to that seen when heat treated. In the case of COOL-LITE which can have a stainless steel metal coating the electric treatment causes rapid degradation causing the coating to lift off. Images can be created on this glass by screenprinting or otherwise applying (e.g. by printing, spraying or roller application) a baffling agent onto the film. Areas of the coating which are protected in this way remain unaffected. The COOL-LITE glasses are available in eight colours, providing an opportunity to create reflective silver pattern, image or logo on a coloured transparent glass. This product may be used as a partition product or a cladding product if colour backed or silvered.

The process involves connecting the sheet glass to be treated to the positive electrode of a variable voltage D.C. current unit to form an anode. The glass is submerged in an aqueous liquid which may be water. The glass anode need only have a shallow covering of liquid, which can be as little as 2 mm deep. The cathode is then introduced into the bath. The cathode may be in the form of a static metal plate, or of a metal pen which can be drawn over the glass surface to create colour if SUNCOOL BRONZE or like glass is used or to selectively remove the coating if COOL-LITE or like glass is used. If the cathode is a static metal plate the colour change or coating removal is more uniform. The speed and nature of change may be altered by varying the voltage between the electrodes.

Usually, the voltage used in the process will be up to 20V, although in general it will not be less than 0.5V; typically a voltage of about 5V is used. The current will usually be up to 1A, and is typically at least 0.5A.

## Experimental investigations

A series of experiments were conducted using Pilkington's SUNCOOL BRONZE glass. This is a clear soda-lime float glass coated one side with a thin layer of titanium nitride. The glass that is produced is known as a solar control glass which is durable and has a high stop out capability for infrared energy (visible and invisible).

From experimentation it was found that by heating the glass in an oxidising atmosphere the optical character of the metal coating was altered, resulting in a variety of colours. The colours that were produced were highly reflective in nature and appeared to have great potential as new decorative glasses in architectural, interior and automotive applications.

It was found that by anodising the coating similar effects could be achieved, but offered a much wider range of reflective colours. It also offered the potential of total flexibility of manufacture, from small scale customising, e.g. logos, to easy mass manufacture or cladding at very high speeds such as 10 sec/unit, with low initial capital and labour costs. The coloured coatings that are achieved are as durable as the base glass.

## Heating in an oxygen-containing atmosphere

Upon heating the glass in air a predictable colour sequence is observed, e.g. gold, purple, pink. Typical conditions needed to achieve pink were to hold the glass at a temperature of 570°C for a time of 20 mins in a gas fired kiln. By altering the temperature or time the colour of the coating can be varied. An upper limit of 600°C was used to prevent the glass from deforming, although we have found that higher temperatures may be used. Selected firing cycles are shown in Table 1.

Table 1

| Selected firing cycles | | | |
|---|---|---|---|
| Size of glass sample 150mm x 250mm, Suncool Bronze | | | |
| 1. | 580°C | 15 mins | Reflective gold |
| 2. | 570°C | 20 mins | Reflective purple |
| 3. | 570°C | 30 mins | Reflective pink |
| 4. | 570°C | >30 mins | Reflective blue |

Powdered bicarbonate of soda was employed in the cycle No. 4 to ensure an equal distribution of the blue colour over the whole surface of the sheet.

The above figures were obtained in a Yorkshire Glass Equipment infra-red kiln. Selected firing cycles in a larger, electric, radiant-heat production oven are shown in Table 2.

Table 2

| Selected firing cycles - production oven | | | |
|---|---|---|---|
| 1. | 440°C | 20 MINS | BLUE |
| 2. | 470°C | 20 MINS | BLUE/GREEN |
| 3. | 490°C | 20 MINS | GREEN/RED |
| 4. | 520°C | 20 MINS | RED |

## Theory of colour change by the action of heat

The experiments pointed to the intrusion of oxygen into the system as heating was taking place. The colour changes observed related to the oxidising colours of titanium (although the sequence is not exactly the same because the coating is titanium nitride and is so thin).

To test this theory the glass was heated in an argon atmosphere with a low oxygen content. This resulted in the same colour sequence being observed but over a very much longer time scale (e.g. several hours). The glass was then heated in Formin gas (10% hydrogen + 90% nitrogen). Only very minor change was observed even after several hours; this change probably being due to oxygen present in the glass itself. The tests seemed to confirm a direct relationship between the action of heat and the presence of oxygen in the atmosphere.

It is hypothesised that, as the glass is heated, more and more oxygen enters the coating presumably causing the formation of titanium oxides, leading to colour change. It is also possible that interference effects make some contribution to the colour, relating to the thin nature of the film and the optical properties of the glass substrate.

## Anodising to cause colour change

The principle of such anodising is believed to be as follows:

When an electric current is passed through a conductive aqueous liquid via electrodes immersed in the liquid, oxygen is formed at the anode (positive electrode). The oxygen that is formed will readily combine with suitable metallic anodes to form an oxide of the metal. This occurs in the case of titanium and the oxide that is produced is in the form of a tightly bonded film on the metal surface.

Using a plastic tank a glass sample to be coloured was attached to the positive lead in the circuit. The glass is immersed in an electrolyte that effectively oxidizes the anode under current (an aqueous solution of ammonium sulfate is an example). A conductive plate such as a stainless steel or titanium plate is connected to the negative lead in the circuit and immersed in the liquid. This plate, the cathode, faces the glass (anode) a distance away. The circuit is then switched on. The voltage that has been set in the circuit between the cathode and anode and the time that the circuit is left on will determine the colour change of the glass coating. The resulting colour sequence that is observed is similar to that observed in the kiln but is achieved in a matter of seconds as opposed to the 15-60 mins taken in the kiln, resulting in a saving of both energy and time.

The mechanism underlying embodiments wherein anodization results in removal of the film, as in the case of films containing stainless steel, is not known - although it has been found that the thicker the stainless steel layer the easier it is to achieve substantial removal of the film material. Top coatings of titanium nitride (if present) appear to be stripped off with the stainless steel. The removal of the film material might not be to the full depth in all cases: the leaving of a very thin (e.g. monomolecular) residue of film material on the glass surface is not precluded, provided that a discernable pattern is obtained.

## Other aspects of anodization

Upon further investigation it was found that the cathode can take the form of an electric pen, which when drawn over the surface of the glass (charged positive as the anode) produces instant colour. The colour is dependent on the voltage of the circuit and the speed at which the electric pen is drawn over the surface. The glass need only be covered by the aqueous liquid to a depth of 1 mm or so thus giving an easy visual check on the image being created on the glass surface.

The electric pen can be of stainless steel, titanium or other insoluble, conductive material and can be of any shape. A cathode in the form of a roller with a textured surface having relief elements adapted to contact selected portions of the coated surface of the glass, moving over the glass surface at a controlled speed and voltage, would impart a pattern or image in a particular colour in a few seconds. Corporate identities, architectural lettering, and patterns could easily be manufactured by hand for quick response to clients' needs; or a computer controlled unit could be employed to print a programmable image into the glass. It has also been found that by printing with an insulative medium, areas can be masked from the effects of colour changes.

6

## Properties of the metal coatings before and after treatment

The titanium nitride coating is typically 100 nanometers thick. It is a very stable compound with a high melting point (2950°C) and is highly conductive. Tests reveal that the more the coating is oxidised the more infrared energy will pass through the glass, i.e., the solar control properties are gradually degraded.

The present invention is illustrated further in and by the following Examples.

## Example 1

The starting material was a sheet of SUNCOOL BRONZE glass (from Messrs. Pilkington), this being a 6mm thick, soda-lime glass sheet, the surface of one face of which was provided with a coating comprising titanium nitride. The glass was cut to a size of 19cm x 8cm to provide an oblong sample, which was then cleaned.

A selective colouring agent was prepared by taking a mixture of 65 percent by weight lead monoxide and 35 percent by weight tin oxide, in a finely ground powder form, and forming a paste by blending that mixture with a combination of propylene oxide and synthetic polymers, which combination is available under the trade mark "Decoflux WB, 35". The Decoflux acted as a carrier for the lead and tin oxides. This selective colouring agent was painted by hand onto the coated face of the glass sample in a desired pattern and was then allowed to dry.

The glass sample was then placed in an electrical kiln and was heated in air. The setting of the kiln was such that a temperature of 435°C was to be achieved in a time of 3 hours. Once that temperature had been achieved, the kiln was switched off and allowed to cool down naturally. After cooling, the glass sample was removed from the kiln and was cleaned with water.

A deep blue colour was observed in those areas of the glass surface to which the selective colouring agent had applied. The unpainted areas of the glass were substantially unaffected.

## Example 2

The general procedure of Example 1 was followed, except that the mixture of lead and tin oxides in fine powder form were made into an aqueous paste (which also comprised polyethylene glycol as a wetting agent), which paste was applied to the coated glass surface by screenprinting. The end product was comparable to that obtained in Example 1.

## Example 3

The starting material was a COOL-LITE SS 108 glass sheet (from Messrs. St. Gobain), which was a 6mm thick, soda-lime glass sheet, one face of which was provided with a coating comprising stainless steel, which coating is provided with a protective film comprising titanium nitride. The glass sheet was cut to provide a square sample having dimensions of 300mm x 300mm, which sample was then cleaned.

An electrical resist material was applied by screenprinting to the coated surface of the glass sample in a dot matrix pattern and was allowed to dry overnight. The electrical resist material was an alkali screen print resist, formulated for the metal plating and anodising industry, available under the trade mark "Repropak 975" from Messrs. Reprochem.

The glass sample bearing the cured resist was then placed in a polypropylene tank and was supported on one of its edges in a vertical position. A stainless steel square plate, having dimensions of 300mm x 300mm x 1mm was also placed in the tank. The said steel plate was supported on one of its edges in a vertical position with one face parallel to, and at a constant distance of 19mm from, the screenprinted face of the glass sample. The glass sheet was connected to the positive lead of a variable voltage supply, whereas the stainless steel plate was connected to the negative lead of the variable voltage supply.

The tank was then filled with tap water to a depth such that the glass sample, the stainless steel plate and the connections to the voltage supply were completely immersed. Care was taken to ensure that the sample and plate remained parallel to each other. The voltage supply was then switched on to give a reading of approximately two volts for a duration of five minutes. The voltage supply being DC, the glass sheet constituted the anode whereas the stainless steel plate constituted the cathode.

After the voltage had been switched off, the glass sheet was removed and the electrical resist was then removed from the glass sample by means of a washing material available under the trade name "Seriwash" from Messrs. Sericol. Removal of the electrical resist revealed areas of unaffected metal coating in the pattern of the original screen print; in the areas that had not been protected by the electrical resist, the metal coating appeared to have been stripped away.

Example 4

The procedure of Example 3 was followed, except that the starting material was Pilkington's SS 10 glass in the form of a 6mm thick sheet, which is understood to be comprise soda-lime glass having a stainless steel coating covered with a thinner layer of titanium nitride. It is also possible to vary the procedure by providing the plastics tank with a stainless steel plate affixed to the bottom thereof, the steel plate being connected to the negative lead of the variable voltage electrical output. The glass sample may then be suspended in the tap water or other electrolyte with its treated surface facing and parallel to the stainless steel plate during the electrolytic step.

It will of course be understood that the present invention has been described above purely by way of example and that modifications of detail can be made within the scope of the invention.

## Claims

1. A method of changing the appearance of glass having a film comprising a metal or metal compound bonded to a surface thereof, the method comprising changing the chemical composition of at least a portion of the film to cause a permanent change in its colour or to cause separation of the portion from the glass.

2. A method as claimed in claim 1, wherein the film comprises titanium nitride.

3. A method as claimed in claim 1, wherein the film comprises stainless steel.

4. A method as claimed in claim 2, wherein the chemical composition is changed by contacting the film or the film portion with oxygen at an elevated temperature so as to change its colour.

5. A method as claimed in claim 2, wherein the chemical composition is changed by anodizing the film or the film portion so as to change its colour.

6. A method as claimed in claim 3, wherein the chemical composition is changed by anodizing the film or the film portion so as to cause its separation from the glass.

7. A method as claimed in claim 4, wherein one or more portions of the film are masked with material to prevent oxygen reaching the underlying film or coated with a material to accelerate the change in composition.

8. A method as claimed in claim 4 or claim 7, wherein the elevated temperature is from $200°$ to $630°$ C.

9. A method as claimed in claim 5 or claim 6, wherein the cathode is in the form of a stationary plate and, optionally, one or more areas of the film are masked to prevent anodizing.

10. A method as claimed in claim 5 or claim 6, wherein the cathode is applied selectively to one or more regions of the film to anodize only the one or more regions.

11. A method as claimed in any one of claims 5, 6, 9 or 10, wherein the anodizing uses a voltage of from 0.5V to 20V and a current of from 0.5A to 1 A.

12. A glass having bonded to a surface thereof a film comprising a metal or metal compound, the chemical composition of at least a portion of which film has been changed.

13. A glass having bonded to a surface thereof a film which comprises titanium nitride and of which one or more portions have been reacted with oxygen or in which there are areas of different oxide content, or having bonded to a surface thereof a film which comprises stainless steel and in which one or more areas have been removed by anodization.

14. The use of glass whose appearance has been changed using a method as claimed in any one of claims 1 to 11 or which is as defined in claim 12 or claim 13 in architecture.

15. A method of changing the appearance, e.g. as viewed in reflected light, of glass coated on a surface thereof with a film comprising titanium nitride, the method comprising:

   (a) heating the glass to a temperature of at least $200°$ C in the presence of an oxygen-containing gas and maintaining the glass at the temperature for a time sufficient to obtain a desired changed in colour; or

   (b) anodizing the film so as to obtain a desired change in colour.

16. A method as claimed in claim 15(a), wherein one or more portions of the film are coated with a substance to accelerate the colour change or to mask the film from the oxygen to slow or stop the colour change.

17. A method of changing the appearance, as viewed in reflected light, of glass coated on a surface thereof with a film comprising stainless steel, the method comprising anodizing the film so as to obtain separation thereof from the glass.

18. A method as claimed in claim 15(b) or claim 17, wherein (I) one or more portions of the film are masked to slow or stop anodization or (II) one or more portions of the film are selectively anodized by contacting only said portion(s) with the cathode.

19. A method as claimed in claim 18 (II) wherein the cathode is in the form of a roller with a textured surface having relief elements which contact only said portion(s) when the roller is rolled over the film or is in the form of a rod which is drawn over the film in the manner of an electric pen.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DD-A-2 248 39 (VEB WISSENSCHAFTLICH-TECHNISCHER BETRIEB WIRTSCHAFTSGLAS) * abstract * | 1,2,4,7,8, 12-16 | C 03 C 17/27 C 03 C 17/22 C 25 D 11/34 C 03 C 17/06 |
| X | GB-A-2 063 920 (UNITED KINGDOM ATOMIC ENERGY AUTHORITY) * abstract * * page 1, lines 36 - 52 * | 1,2,5,9, 12-15,18, 19 | |
| A | CHEMICAL ABSTRACTS, vol. 84, no. 3, 23 February 1976 Columbus, Ohio, USA page 518; ref. no. 51464W & JP-A-50110946 (TOYOTA) (01-09-1975) * abstract * | 1,2,5, 12-15 | |
| A | METAL FINISHING. vol. 84, no. 8, August 1986, HACKENSACK, NJ US pages 11 - 13; B.SEELEY: "ANODIZING THE REACTIVE METALS" * the whole document * | 1,2,5,10, 12-15,1 | |
| X,Y | FR-A-1 373 915 (SPERRY RAND CORP.) * claims 1, 2 * | 1,12,3,6, 9,13,14, 17 | |
| | | | **TECHNICAL FIELDS SEARCHED (Int. Cl.5)** |
| Y | DE-U-8 701 978 (FLACHGLAS AG.) * page 1, paragraph 2 - page 2, paragraph 1 * | 3,6,9,13, 14,17 | C 03 C C 25 D C 25 F |

The present search report has been drawn up for all claims

| Place of search | Date of completion of search | Examiner |
|---|---|---|
| The Hague | 13 November 90 | VAN BOMMEL L. |